# EUROPÄISCHE PATENTSCHRIFT

(11) **EP 2 569 567 B1**
(45) Veröffentlichungstag und Bekanntmachung des Hinweises auf die Patenterteilung: **18.06.2014**
(21) Anmeldenummer: 11780228.0
(22) Anmeldetag: 12.05.2011
(51) Int. Cl.: F16L 23/10, F16L 33/22

(54) **ROHR- UND SCHLAUCHKUPPLUNG**
PIPE AND TUBE COUPLING
RACCORD POUR TUYAUX RIGIDES OU FLEXIBLES

(30) Priorität: 19.11.2010 DE 202010012940 U; 12.05.2010 DE 102010028970
(43) Veröffentlichungstag der Anmeldung: 20.03.2013
(73) Patentinhaber: Georg Springmann Industrie- und Bergbautechnik GMBH, 45472 Mülheim an der Ruhr (DE); SMS Siemag AG, 40237 Düsseldorf (DE)
(72) Erfinder: SPRINGMANN, Georg, 45470 Mülheim (DE); WARMBIER, Dieter, 47441 Moers (DE); HASSELBRINK, Dirk, 47059 Duisburg (DE); WISSEN, Christoph, 47259 Duisburg (DE); PALUSZAK, Miroslaw, 47495 Rheinberg (DE); BEST, Rolf, 45966 Gladbeck (DE)
(74) Vertreter: Nobbe, Matthias
(86) Internationale Anmeldenummer: PCT/DE2011/075108
(87) Internationale Veröffentlichungsnummer: WO 2011/141023

(56) Entgegenhaltungen:
- EP-A1- 0 001 527
- EP-A1- 0 645 574
- DE-A1- 3 305 526
- FR-A1- 2 697 893
- US-A- 4 739 542
- US-A- 5 518 278

## Beschreibung

Die Erfindung betrifft eine Vorrichtung zum Verbinden von Rohr- oder Schlauchenden, deren Verwendung zur Herstellung einer Verbindung sowie damit ausgerüstete Schlauchleitungen.

Solche Vorrichtungen, kurz als Rohr- oder Schlauchkupplung oder auch Rohr- oder Schlauchschelle bezeichnet, sind seit langem in unterschiedlichsten Ausführungen bekannt.

Bei einer aus der DE-AS 25 23 338 bekannten Kupplung dieser Art ist der als Führung für den verlängerten Gelenkbolzen der Teilschalen dienende Steg eines Führungsflansches als radial angeordnete Lasche ausgebildet, die einen radialen, nach außen offenen Schlitz aufweist. Die Führung des Spannhebel-Gelenkbolzens erfolgt innerhalb eines in einem weiteren Steg des Führungsflansches vorgesehenen zweiten Schlitzes, der einen radialen Abschnitt und einen Umfangsabschnitt aufweist. Wenn die Kupplung geschlossen werden soll, muss das verlängerte Ende des Gelenkbolzens der Teilschalen in den radialen Schlitz eingeführt werden. Gleichzeitig muss der Spannhebel-Gelenkbolzen innerhalb des zweiten Schlitzes verschoben werden. Dies erfordert eine umständliche Handhabung.

Bei einer weiteren bekannten Schlauchkupplung gemäß DE-GM 83 30 160 ist das verlängerte Ende des Gelenkbolzens der Teilschale durch eine Bohrung eines am Anschlußstutzen befestigten Steges geführt. Er hat weder in radialer Richtung noch in Umfangsrichtung Spiel. Der Spannhebel-Gelenkbolzen greift in der Schließstellung in einen in Umfangsrichtung offenen Schlitz eines zweiten am Anschlußstutzen befestigten Steges ein. Während des wesentlichen Teils des Bewegungsspielraums zwischen der Offenstellung und der Schließstellung ist bei dieser bekannten Schlauchkupplung der Spannhebel-Gelenkbolzen nicht ausreichend geführt. Vor seinem Eingreifen in den offenen Schlitz kann es zu einem axialen Versatz kommen, wodurch der Schließvorgang erschwert wird, weil von Hand eine entsprechende Justierung zwischen den in Eingriff zu bringenden Teilen nachgeholt werden muss.

Gemäß der EP 0 195 914 A2 bestehen solche Schlauchschellen im einfachsten Fall aus einer zwei Schellensegmente aufweisenden Schelle, wobei die beiden Schellensegmente an jeweils einem Ende gelenkig über einen Bolzen miteinander verbunden sind. Zum Verschließen wird dann die geöffnete Schelle über die Flansche der aneinander geschobenen Rohrenden oder entsprechend über Ringbunde von Schlauchtüllen gelegt, wobei die Seitenteile der Schellensegmente die Flansche/Ringbunde außen umgreifen und ein axiales Auseinanderschieben (Öffnen) der Rohr- bzw. Schlauchenden zuverlässig verhindern.

Die Druckschrift FR 2 697 893 A1 offenbart eine Vorrichtung nach den Oberbegriff von Anspruch 1.

Um zum Verschließen zeitaufwendige Verschraubungen zu vermeiden, sind die bekannten Rohr- bzw. Schlauchkupplungen als sog. Schnellkupplungen ausgeführt. Dazu ist oft ein Spannhebel vorgesehen, welcher mittels eines Gelenkbolzens im freien Endbereich eines Schellensegments befestigt ist, während ein nächster Gelenkbolzen zur Befestigung des einen Endes wenigstens einer Feder dient. Mit ihrem anderen Ende ist die wenigstens eine Feder in einer Aussparung des anderen Schellensegments eingehakt. Die Gelenkbolzen sind jeweils mit Hilfe von Muttern verschraubt.

Obwohl die bekannten Rohr- oder Schlauchkupplungen seit langem und mit großem Erfolg eingesetzt werden, gibt es Anwendungsbereiche, in denen die bekannten Rohr- oder Schlauchkupplung zu umständlich an den zu verbindenden Rohr- oder Schlauchenden positioniert werden müssen. Dies gilt insbesondere für großvolumige Schläuche und Rohre, die entsprechend groß dimensionierte und so auch schwere Kupplungen bedingen.

Der Erfindung liegt daher die Aufgabe zugrunde, die eingangs genannte und zuvor näher beschriebene Rohr- und Schlauchkupplung zum Verbinden zweier Rohr- oder Schlauchenden so auszugestalten und weiterzubilden, dass ein einfaches Schließen und Öffnen der Rohr- oder Schlauchkupplung ermöglicht wird und dabei gewährleistet wird, dass die Rohr- oder Schlauchkupplung bei der Montage und Lagerung des Rohres oder Schlauches nicht verloren geht oder abfällt.

Weiterhin ist erwünscht, dass ein einfacher und kostengünstiger Aufbau sowie eine einfache Handhabbarkeit der Vorrichtung erhalten bleiben.

Die Aufgabe wird erfindungsgemäß gelöst durch die Bereitstellung einer Vorrichtung mit den in den Ansprüchen definierten Merkmalen.

So betrifft die Erfindung eine Vorrichtung zur Herstellung einer lösbaren Verbindung freier Rohr- oder Schlauchenden nach Anspruch 1.

Die erfindungsgemäße Vorrichtung ermöglicht eine einfache, schnelle und sichere Verbindung von zwei Schlauch- oder Rohrenden. Dazu werden die Hülsen jeweils zunächst an ihrem, dem Flansch entgegengesetzten Ende mit dem jeweiligen Ende der miteinander zu verbindenden Rohre- oder Schläuche verbunden, was durch Anschrauben oder Anschweißen erfolgen kann. Dann werden die Flansche miteinander in Eingriff gebracht und die Schellensegmente, die die Flansche in der Gebrauchsposition radial umgreifen, an ihren betreffenden Enden mit den Verbinderelementen verbunden, so dass die Flansche druckdicht miteinander kuppeln.

Die Schellensegmente haben dabei in der Regel einen - koaxial zur Hülsen/Rohrachse - im Wesentlichen U-förmigem, oder trapezoiden Querschnitt und können so die Flansche der Hülsen in Gebrauchsposition in miteinander gekoppeltem Zustand außen übergreifen und gegeneinander pressen. Bei einem trapezoiden Querschnitt können die Schellensegmente die Zentrierung der Flansche unterstützen.

Dadurch, dass zumindest eines der Schellensegmente an einer der beiden Hülsen, bei einem ortsfesten Rohrende und einem beweglichen Rohrende vorzugsweise an der Hülse am ortsfesten Rohrende angeordnet, schwenkbar festgelegt ist, kann bei Trennen der Verbindung die Verbindungseinheit aus Schellensegmenten nicht abfallen und beschädigt werden oder gar verloren gehen, wenn die Rohre oder Schläuche demontiert und gelagert werden.

Die zusammenwirkenden Verbinderelemente können zur Ausbildung einer die Schellensegmente fixierenden Verbindung in Form einer, an dem freien Ende eines Schellensegmentes schwenkbar - beispielsweise um einen Lagerbolzen - festgelegten Augenschraube und einer an dem freien Ende des anderen Schellensegmentes ausgebildeten schlitzförmigen Aufnahme für die Augenschraube ausgebildet sein. Die Schellensegmente werden bei der Montage nach dem Zusammenschieben der Flansche in die Gebrauchsposition geschwenkt und umgreifen die Flansche der Hülse außen. Die an dem freien Ende eines Schellensegmentes um den Lagerbolzen schwenkbar angeordnete Augenschraube kann nachfolgend aus der Nichtgebrauchsposition in die Gebrauchsposition geschwenkt werden und ist dann mit dem Ende des Gewindeabschnittes in der geschlitzten Aufnahme angeordnet. In dieser Position wird die Augenschraube über eine Sicherungsmutter, vorzugsweise in Kombination mit einer Kontermutter, gegen ein Verschwenken gesichert. Somit werden auch die Schellensegmente in ihrer Position fixiert. Infolge des U-förmigem oder trapezoiden Querschnitts drücken die Schellensegmente die Flansche gegeneinander und verstärken somit den Anpressdruck der Zentrierkonusflächen in axialer Richtung.

Zusätzlich kann ein Sicherungselement vorgesehen sein, das ein Ausschwenken der Augenschraube aus der Gebrauchsposition verhindert. Dieses Sicherungselement kann in Form eines angepassten Sicherungsbügels oder Sicherungsgehäuses ausgebildet sein und so über die Augenschraube und/oder den Lagerbolzen gesteckt das Ausschwenken der Augenschraube, beispielsweise bei Beschädigung der Augenschraube, verhindern. Ein besonderes Sicherungselement kann in Form eines U-förmigen Gabeljoches mit zwei Gabelschenkeln und einer die Gabelschenkel verbindenden Traverse, die eine Bohrung aufweist, ausgebildet sein. In den beiden Gabelschenkeln sind Langlöcher vorgesehen, in denen, beiderseits der Aufnahme des Lagerbolzens im freien Ende des Schellensegmentes, das jeweils außenseitig überstehende Ende des Lagenbolzens angeordnet ist. Durch die Bohrung der Traverse ist der Gewindeabschnitt der Augenschraube geführt, und somit ist das Gabeljoch durch die Länge der Langlöcher begrenzt auf der Augenschraube verschiebbar. Bei Montage der Schellensegmente kann die Augenschraube zusammen mit dem auf ihr verschiebbaren Gabeljoch aus der Nichtgebrauchsposition in die Gebrauchsposition in den Aufnahmeschlitz am freien Ende des anderen Schellensegmentes geschwenkt werden. Bei Festziehen der Sicherungsmutter wird das Gabeljoch kraftschlüssig auf das freie Ende des Schellensegmentes (mit dem Aufnahmeschlitz für die Augenschraube) gepresst. Bevorzugt ist zusätzlich ein an dem freien Ende des Schellensegmentes ein Sicherungskragen (oder Sicherungsnase) angeordnet, der so bemessen ist, das er das Einschwenken der Augenschraube ermöglicht, nach dem Festziehen der Sicherungsmutter jedoch ein Ausschwenken der Augenschraube (mit Gabeljoch) formschlüssig verhindert, so daß sich die Schellensegmente, beispielsweise bei Beschädigung der Augenschraube, nicht unbeabsichtigt lösen können. Bei dieser Ausführungsform kann die Augenschraube weiterhin auch durch einen Sicherungskeil- oder splint gesichert werden, der in ein oder beide Langlöcher der Schenkel des Gabeljoches eingesteckt ist. Bei jeder der Ausführungsformen kann die Sicherungsmutter weiterhin durch eine Kontermutter gesichert sein.

Um bei einer Demontage eine leichte Trennung der Schellensegmente zu ermöglichen, weist erfindungsgemäß die Augenschraube einen Nocken auf, der an dem Augenrand der Augenschraube, beispielsweise an dem, dem Gewinde gegenüberliegenden Bereich oder im rechten Winkle zur Gewindeachse der Augenschraube angeordnet sein kann. Bei Ausschwenken der Augenschraube aus der Gebrauchs- in die Nichtgebrauchsposition wird über den Nocken eine Kraft auf die Schellensegmente ausgeübt, die diese Schellensegmente aus dem Eingriff bringt und so die Demontage erleichtert.

Erfindungsgemäß sind die Schellensegmente mittels eines Gelenkbolzens gelenkig verbunden. Dabei ist der Gelenkbolzen bevorzugt in einer, an einer der Hülsen ausgebildeten Aufnahme angeordnet. Somit sind die beiden Schellensegmente um den Gelenkbolzen schwenkbar gelagert und können bei der Montage der erfindungsgemäßen Vorrichtung so weit ausgeschwenkt werden, daß die Flansche ungehindert miteinander in Eingriff gebracht werden können. Danach können die Schellensegmente die Flansche umgreifend angeordnet werden und sie werden dann mittels der Verbinderelemente miteinander verbunden und gewährleisten den druckdichten und bewegungssicheren Betrieb der Rohrkupplung.

Um eine Beweglichkeit der Schellensegmente axial und/oder angular zu der Achse des Gelenkbolzens zu ermöglichen, ist eine Lagerung der Schellensegmente mit axialen und/oder angularem Spiel am Gelenkbolzen erfindungsgemäß vorgesehen. Dazu kann der Gelenkbolzen selbst flexibel ausgebildet sein, oder diese Beweglichkeit kann über eine Abstimmung der Passmasse von Gelenkbolzen und Gelenkbolzenaufnahme erreicht werden, wobei ein radiales Passmaß-Spiel, beispielhaft bis zu 3mm, oder 2mm, gewählt werden kann. Um das Eindringen von Schmutz zwischen Gelenkbolzen und Gelenkbolzenaufnahme zu verhindern, kann eine flexible Dichtung, beispielsweise ein Kompensator vorgesehen sein, der zwischen Schellensegment und Hülsenkragen, auch vorgespannt, angeordnet sein kann.

In einer anderen Ausführungsform ist ein Schellensegment in der Gebrauchsposition an einem Ende an einer Hülse schwenkbar festgelegt und an dem anderen Ende, beispielswiese über einen weiteren Gelenkbolzen, mit dem zweiten Schellensegment schwenkbar verbunden, wobei das zweite Schellensegment mit dem freien Ende wiederum an dem an der Hülse festgelegten Ende des ersten Schellensegmentes festlegbar ist.

In allen vorgenannten Ausführungsformen werden die Flansche der in Gebrauchsposition zusammengeschobenen Hülsen so in miteinander gekoppeltem Zustand gehalten. Die Abdichtung der Flansche zueinander kann zusätzlich zu den in den Flanschen vorgesehenen Zentrierkonen mittels einer optional vorgesehenen und zwischen den Flanschen angeordneten Dichtung weiter gesichert werden.

Im einfachsten Falle ist die Aufnahme für den Gelenkbolzen in einem Kragen an der Hülse oder einem kragenabschnittartigen Vorsprung (Hülsenkragen) oder Steg ausgebildet. Ebenso kann an einer der Hülsen ein Ablagekragen vorgesehen sein, der bei der Montage auch als Montagehilfskragen für den Schlauch, beispielsweise einen Sauerstofflanzenschlauch, dienen kann.

Um die Montage zu erleichtern, können wie erwähnt an den zueinander korrespondierenden Flanschen Zentrierkonen ausgebildet sein. So wird ermöglicht, dass beim Zusammenschieben der Flansche diese zueinander zentriert werden und ein Verkanten verhindert wird. Zwischen den Flanschen kann besonders weiterhin ein Dichtelement, beispielsweise in Form einer Flachdichtung oder eines O-Ringes, die in einer Nut in einem der Flansche angeordnet sind, vorgesehen sein.

Anstelle der zwei Schellensegmente kann auch eine mehrteilige Schellensegment-Anordnung vorgesehen sein, wenn die räumlichen Gegebenheiten eine höhere Beweglichkeit und/oder kleinere Schellensegmente erfordern. So betrifft die Erfindung auch eine Vorrichtung wie oben beschrieben mit wenigstens drei gelenkig miteinander verbundenen Schellensegmenten.

Die erfindungsgemäße Vorrichtung ist besonders geeignet zum Verbinden von Rohren und/oder Schläuchen, die einen großen Querschnitt haben, da die Montage durch die an den zu verbindenden Bauteilen verbleibenden Kupplungselemente erleichtert wird. So betrifft die Erfindung auch eine mit mindestens einer der erfindungsgemäßen Vorrichtungen ausgestattete Rohr- oder Schlauchleitung. Die Schellensegmente können schlauchseitig, somit an jedem Ende einer Rohr- oder Schlauchleitung angeordnet sein, während an der ortsfesten Seite nur die Hülse mit Flansch verbleibt. Bevorzug ist die Anordnung der Schellensegmente an der ortsfesten Seite, so daß im Falle von Wartungsarbeiten oder eines Defektes an der Schlauchleitung, beispielsweise eines Edelstahlwellschlauches für eine Sauerstoff-Einblaslanze eines Konverters, dieser schnell ausgewechselt werden kann. Ebenso ist die Verwendung erfindungsgemäßer Vorrichtungen oder damit ausgerüsteter Metall- oder Gummischläuche bei der Verschlauchung in der Stahlwerkstechnik, beispielsweise von Segmenten einer Stranggussanlage, oder am Hochofen möglich.

Die Erfindung wird anhand der beigefügten Zeichnungen weiter erläutert. Dabei zeigt:
Figur 1 eine geteilte Ansicht (Querschnitt links/ Draufsicht rechts/ Querschnitt ganz rechts) (in Längsrichtung) einer erfindungsgemäßen Vorrichtung;
Figur 2 eine Draufsicht (in Längsrichtung) einer erfindungsgemäßen Vorrichtung; und
Figur 3 eine Querschnittsansicht (in Querrichtung) einer erfindungsgemäßen Vorrichtung;
Fig. 4 eine Draufsicht im Winkel von etwa 45° auf eine erfindungsgemäße Vorrichtung;
Fig. 5 eine lotrechte Draufsicht auf eine erfindungsgemäße Vorrichtung;
Fig. 6 eine Querschnittsansicht der erfindungsgemäße Vorrichtung aus Figur 5 entlang der Schnittebene A-A.

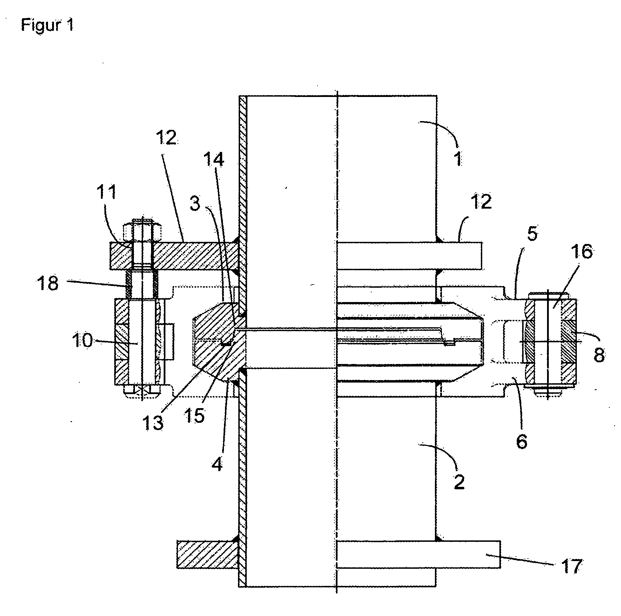

Wie in Figur 1 gezeigt, sind die Hülsen (Rohre) 1 und 2 an ihren Flanschen 3 und 4 aneinander gekuppelt. Die Flansche werden von den Schellensegmenten 5 und 6 umgriffen. Die Schellensegmente sind über den Gelenkbolzen 10 schwenkbar gelagert und an der Hülse 1 festgelegt. An dem anderen (freien) Ende der Schellensegmente sind die Augenschraube 7 -nicht dargestellt-, Aufnahmeschlitz 8 und -nicht dargestellt- Mutter 9 angeordnet. Der Gelenkbolzen 10 ist im Hülsenkragen12 festgelegt. Zwischen den Flanschen 3 und 4 ist eine Dichtung 13 neben den Zentrierkonen 14 und 15 angeordnet. Augenschraube 7 ist über einen Achsbolzen 16 schwenkbar gelagert. Über die Länge des Gelenkbolzens 10 und die Distanzhülse 18, die auch als Kompensator ausgeführt sein kann, kann der Abstand der Schellensegmente 5; 6 von dem Hülsenkragen 12 variiert werden und so der Fußpunkt des Hülsenkragens 12 auf der Hülse 1 den Gegebenheiten angepasst werden.

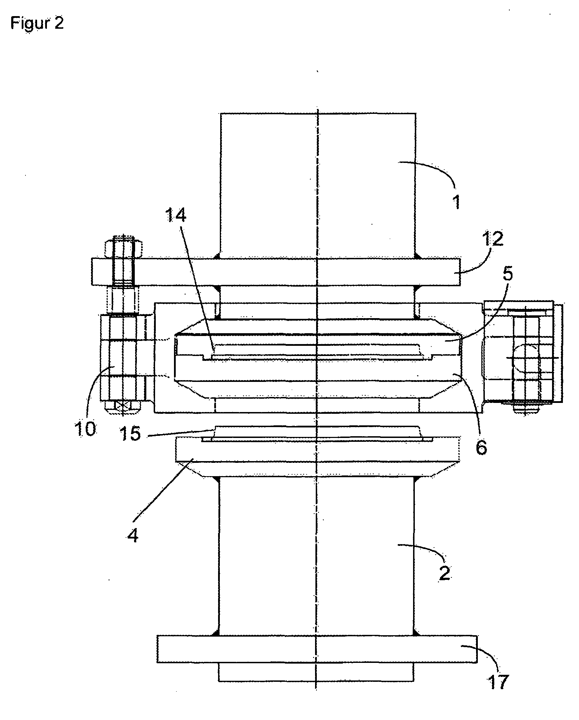

Figur 2 zeigt die erfindungsgemäße Vorrichtung aus Figur 1 im nicht-eingreifenden (teilweise demontierten) Zustand in der Draufsicht, mit Hülsen 1 und 2, den Schellensegmenten 5 und 6, dem Flansch 4, Gelenkbolzen 10 in Hülsenkragen 12 angeordnet, sowie dem Ablagekragen 17.

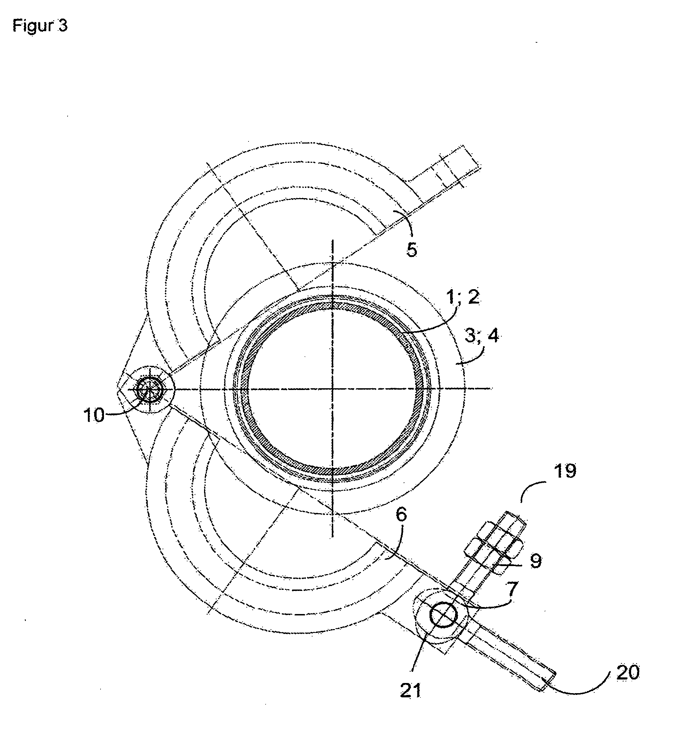

Figur 3 zeigt die erfindungsgemäße Vorrichtung in Querschnittsansicht im aufgeklappten Zustand mit den Hülsen 1 und 2 , Flanschen 3 und 4, Schellensegmenten 5 und 6 , Gelenkbolzen 10 und Augenschraube 7 mit Nocken 21 , die in Gebrauchsposition 19 und Demontageposition 20 gezeigt ist.

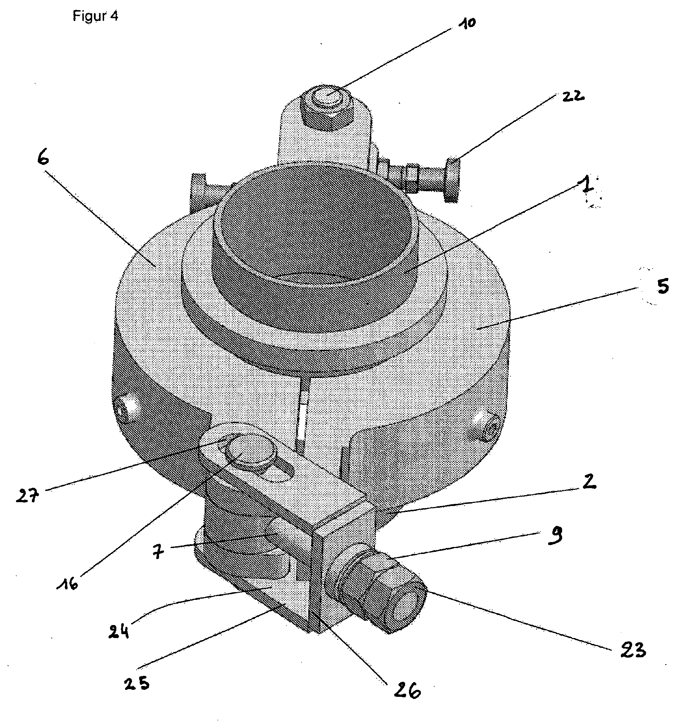

Figur 4 zeigt eine 45°-Draufsicht auf die erfindungsgemäße Vorrichtung mit den Hülsen 1 und 2 über ihre nicht dargestellte Flanschen 3 und 4 aneinander gekuppelt. Die Flansche 3 und 4 werden von den Schellensegmenten 5 und 6 umgriffen. Die Schellensegmente sind über den Gelenkbolzen 10 schwenkbar gelagert und über den Kragen 12 an der Hülse 1 festgelegt. Mit den Feststellschrauben 22 können die Schellensegmente am Bolzen 10 festgelegt sein. An dem anderen (freien) Ende der Schellensegmente sind die Augenschraube 7, Aufnahmeschlitz 8-nicht dargestellt- sowie Mutter 9 und Kontermutter 23 angeordnet. Die Augenschraube 7 ist über einen Lagerbolzen 16 schwenkbar gelagert und trägt das Gabeljoch 24 mit den Gabeljochschenkeln 25 und der Traverse 26 mit einer die Augenschraube umfassenden Bohrung. In jedem Gabeljochschenkel ist ein Langloch 27 vorgesehen, in das das jeweilige Ende des Lagerbolzens 16 eingreift und so eine Verschiebbarkeit des Gabeljochs 24 auf der Augenschraube 7 ermöglicht wird.

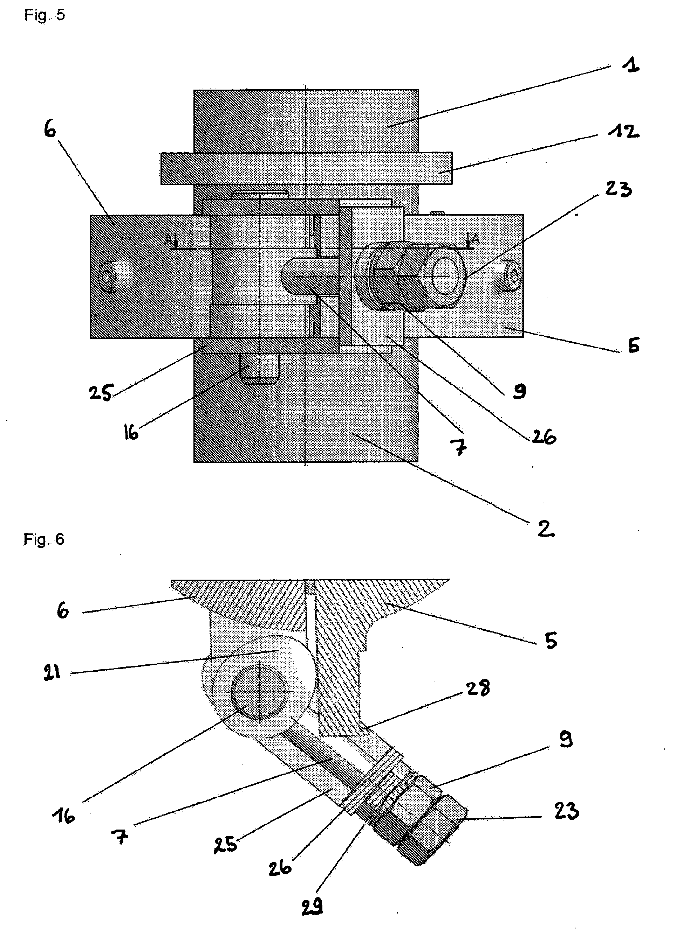

Figur 5 zeigt eine lotrechte Draufsicht auf die erfindungsgemäße Vorrichtung mit den Hülsen 1 und 2, die über ihre nicht dargestellte Flanschen 3 und 4 aneinander gekuppelt. Die Flansche 3 und 4 werden von den Schellensegmenten 5 und 6 umgriffen. Die Schellensegmente 5 und 6 sind über den Gelenkbolzen 10 schwenkbar gelagert und über den Kragen 12 an der Hülse 1 festgelegt. Mit den Feststellschrauben 22 können die Schellensegmente am Bolzen 10 festgelegt sein. An dem anderen (freien) Ende der Schellensegmente sind die Augenschraube 7, Aufnahmeschlitz 8-nicht dargestellt- sowie Mutter 9 und Kontermutter 23 angeordnet. Die Augenschraube 7 ist über den Lagerbolzen 16 schwenkbar gelagert und trägt das Gabeljoch 24 mit den Gabeljochschenkeln 25 und der Traverse 26 mit einer die Augenschraube umfassenden Bohrung.

Figur 6 zeigt eine Querschnittsansicht der erfindungsgemäßen Vorrichtung entlang der Schnittebene A-A aus Figur 5. Die Schellensegmente 5 und 6 werden bei Schwenken der Augenschraube 7 (mit Gabeljoch 24 mit den Gabeljochschenkeln 25 und der Traverse 26, Mutter 9, Kontermutter 23) infolge der Hebelwirkung über Nocken 21 aus dem Eingriff um die Flansche 3 und 4 gebracht. In der Gebrauchsposition ist das Gabeljoch über die Traverse 26 formschlüssig über den Sicherungskragen 28 am freien Ende des Schellensegmentes 5 gesichert und wird kraftschlüssig über die Mutter 8 gegen das Schellensegment 5 gepresst. Eine zweiteilige Kalottenscheibe 29 (Gelenkscheibe) ermöglicht beim Anziehen der Mutter 9 eine gleichmäßige Kraftverteilung auf die Gabeljochschenkel 25.

### Bezugszeichenliste

- 1, 2: Hülse
- 3, 4: Flansch
- 5, 6: Schellensegment
- 7: Augenschraube
- 8: Aufnahmeschlitz
- 9: Mutter
- 10: Gelenkbolzen
- 11: Aufnahme für den Gelenkbolzen
- 12: Hülsenkragen
- 13: Dichtung
- 14,15: Zentrierkonus
- 16: Lagerbolzen
- 17: Ablagekragen
- 18: Distanzhülse
- 19: Gebrauchsposition
- 20: Nichtgebrauchs-/ Demontageposition
- 21: Nocken
- 22: Feststellschraube
- 23: Kontermutter
- 24: Gabeljoch
- 25: Gabeljochschenkel
- 26: Traverse
- 27: Langloch
- 28: Sicherungskragen
- 29: Zweiteilige Kalottenscheibe

## Patentansprüche

1. Vorrichtung zur Herstellung einer lösbaren Verbindung freier Rohr- oder Schlauchenden mit:
- zwei Hülsen (1,2) mit je einem Flansch (3,4), wobei die Flansche (3,4) zueinander korrespondierend ausgebildet sind,
- zwei gelenkig miteinander verbundenen Schellensegmenten (5,6), die dazu ausgelegt sind, die Flansche (3,4) der in Gebrauchsposition zusammengeschobenen Hülsen (1,2) in miteinander gekoppeltem Zustand zu halten,
- wobei die freien Enden der Schellensegmente mittels einander korrespondierender Verbinderelemente (7,8,9) koppelbar sind, und
- wobei zumindest eines der Schellensegmente (5,6) an einer der beiden Hülsen (1,2) festgelegt ist,
- wobei die korrespondierenden Verbinderelemente (7,8,9) in Form einer, an dem freien Ende eines Schellensegmentes (5,6) schwenkbar festgelegten Augenschraube (7) und einer an dem freien Ende des anderen Schellensegmentes ausgebildeten schlitzförmigen Aufnahme (8) für die Augenschraube (7) ausgebildet sind,
- wobei die Schellensegmente (5,6) mittels eines Gelenkbolzens (10) gelenkig verbunden sind,
**dadurch gekennzeichnet, dass**
- die Lagerung der Schellensegmente mit einem axialen und/oder angularem Spiel am Gelenkbolzen vorgesehen ist, und dass die Augenschraube einen Nocken (21) aufweist.

2. Vorrichtung nach Anspruch 1, wobei der Gelenkbolzen (10) in einer, an einer der Hülsen (1) ausgebildeten Aufnahme (11) angeordnet ist.

3. Vorrichtung nach Anspruch 2, wobei diese Aufnahme (11) für den Gelenkbolzen (10) in einem Hülsenkragen oder Hülsenkragenabschnitt (12) ausgebildet ist.

4. Vorrichtung nach einem der Ansprüche 1 bis 3, wobei die Schellensegmente (5,6) um den Gelenkbolzen (10) schwenkbar angeordnet sind.

5. Vorrichtung nach einem der vorhergehenden Ansprüche, wobei die Schellensegmente (5,6) einen im Wesentlichen U-förmigen Querschnitt aufweisen, die die Flansche (3,4) der Hülsen (1,2) In Gebrauchsposition in miteinander gekoppeltem Zustand außen übergreifen.

6. Vorrichtung nach einem der vorhergehenden Ansprüche, wobei an den zueinander korrespondierenden Flanschen (3,4) Zentrierkonen (14,15) ausgebildet sind.

7. Vorrichtung nach einem der vorhergehenden Ansprüche mit wenigstens drei gelenkig miteinander verbundenen Schellensegmenten (5,6).

8. Vorrichtung nach einem der vorhergehenden Ansprüche, wobei mindestens ein Sicherungselement an den Schellensegmenten angeordnet Ist, das in Gebrauchsposition ein Entkoppeln der miteinander korrespondierenden Verbinderelemente (7;8;9) bei Gebrauch der Vorrichtung verhindert.

9. Vorrichtung nach Anspruch 8, wobei das Sicherungselement in Form eines an einem freien Ende eines Schellensegmentes 6 schwenkbar festgelegten U-förmigen Gabeljoches 24 mit zwei Gabelschenkeln 25 und einer die Gabelschenkel 25 verbindenden Traverse 26 ausgebildet ist, wobei das Gabeljoch 24 mit dem freien Ende des anderen Schellensegmentes 5 koppelbar ist.

10. Rohr- oder Schlauchleitung mit mindestens einer Vorrichtung nach einem der Ansprüche 1 bis 9.

## Claims

1. A device for making a releasable connection between free pipe or tube ends comprising:
- two sleeves (1, 2) having a respective flange (3, 4), wherein the flanges (3, 4) are of a mutually corresponding configuration,
- two hingedly interconnected clamping ring segments (5, 6) adapted to hold the flanges (3, 4) of the sleeves (1, 2) which are pushed together in the position of use in the mutually coupled condition,
- wherein the free ends of the clamping ring segments can be coupled by means of mutually corresponding connector elements (7, 8, 9), and
- wherein at least one of the clamping ring segments (5, 6) is fixed to one of the two sleeves (1, 2),
- wherein the corresponding connector elements (7, 8, 9) are in the form of an eye bolt (7) pivotably fixed to the free end of a clamping ring segment (5, 6), and a slot-shaped receiving means (11) at the free end of the other clamping ring segment for receiving the eye bolt (7),
- wherein the clamping ring segments (5, 6) are hingedly connected by means of a pivot pin (10),
**characterized in that** the mounting of the clamping ring segments is provided with an axial and/or angular play on the pivot pin, and that the eye bolt has a cam (21).

2. A device as set forth in claim 1 wherein the pivot pin (10) is arranged in a receiving means (11) provided on one of the sleeves (1).

3. A device as set forth in claim 2 wherein said receiving means (11) for the pivot pin (10) is provided in a sleeve collar or sleeve collar portion (12).

4. A device as set forth in one of claims 1 through 3 wherein the clamping ring segments (5, 6) are arranged pivotably about the pivot pin (10).

5. A device as set forth in one of the preceding claims wherein the clamping ring segments (5, 6) are of a substantially U-shaped cross-section, which externally engage over the flanges (3, 4) of the sleeves (1, 2) in the position of use in the mutually coupled condition.

6. A device as set forth in one of the preceding claims wherein centering cones (14, 15) are provided at the mutually corresponding flanges (3, 4).

7. A device as set forth in one of the preceding claims comprising at least three hingedly interconnected clamping ring segments (5, 6).

8. A device as set forth in one of the preceding claims wherein at least one securing element is arranged on the clamping ring segments, which in the position of use prevents uncoupling of the mutually corresponding connector elements (7; 8; 9) in use of the device.

9. A device as set forth in claim 8 wherein the securing element is in the form of a U-shaped forked yoke (24) which is pivotably fixed to a free end of a clamping ring segment (6) and has two fork limbs (25) and a transverse portion (26) connecting the fork limbs (25), wherein the forked yoke (24) can be coupled to the free end of the other clamping ring segment (5).

10. A pipe or tube line having at least one device as set forth in one of claims 1 through 9.

## Revendications

1. Dispositif servant à assembler des extrémités libres de tuyaux rigides ou flexibles de manière démontable, comprenant :
- deux manchons (1, 2) pourvus chacun d'une bride (3, 4), les brides ayant des formes mutuellement correspondantes,
- deux segments de collier (5, 6) assemblés entre eux de manière articulée, qui sont conçus pour maintenir dans un état mutuellement accouplé les brides (3, 4) des manchons (1, 2) poussés l'un contre l'autre en position d'utilisation,
- sachant que les extrémités libres des segments de collier peuvent être accouplées au moyen d'éléments de liaison (7, 8, 9) mutuellement correspondants,
- et sachant qu'au moins un des segments de collier (5, 6) est fixé à l'un des deux manchons (1, 2),
- sachant que les éléments de liaison correspondants (7, 8, 9) sont réalisés sous la forme d'un boulon à oeillet (7) fixé à pivotement à l'extrémité libre d'un segment de collier (5, 6) et d'un logement en forme de fente (8) pour le boulon à oeillet (7), configuré à l'extrémité libre de l'autre segment de collier,
- sachant que les segments de collier (5, 6) sont assemblés de manière articulée au moyen d'un boulon d'articulation (10),
**caractérisé en ce que** le montage des segments de collier est prévu avec un jeu axial et/ou angulaire sur le boulon d'articulation, et **en ce que** le boulon à oeillet présente une saillie (21).

2. Dispositif selon la revendication 1, sachant que le boulon d'articulation (10) est disposé dans un logement (11) configuré sur un des manchons (1).

3. Dispositif selon la revendication 2, sachant que ce logement (11) pour le boulon d'articulation (10) est configuré dans un collet de manchon ou dans une partie formant collet de manchon (12).

4. Dispositif selon l'une des revendications 1 à 3, sachant que les segments de collier (5, 6) et le boulon d'articulation (10) sont disposés à pivotement.

5. Dispositif selon l'une des revendications précédentes, sachant que les segments de collier (5, 6) présentent une section essentiellement en forme de U, qui recouvre extérieurement les brides (3, 4) des manchons (1, 2) en position d'utilisation, dans l'état mutuellement accouplé.

6. Dispositif selon l'une des revendications précédentes, sachant que des cônes de centrage (14, 15) sont formés sur les brides mutuellement correspondantes (3, 4).

7. Dispositif selon l'une des revendications précédentes avec au moins trois segments de collier (5, 6) assemblés entre eux de manière articulée.

8. Dispositif selon l'une des revendications précédentes, sachant qu'au moins un élément de blocage est disposé sur les segments de collier, élément qui, en position d'utilisation, empêche un désaccouplement des éléments de liaison mutuellement correspondants (7, 8, 9) lors de l'utilisation du dispositif.

9. Dispositif selon la revendication 8, sachant que l'élément de blocage est réalisé sous la forme d'un berceau fourchu (24) en forme de U, fixé à pivotement à une extrémité libre d'un segment de collier (6) et pourvu de deux branches de fourche (25) et d'une traverse (26) reliant les branches de fourche (25), sachant que le berceau fourchu (24) peut être accouplé à l'extrémité libre de l'autre segment de collier (5).

10. Conduite rigide ou flexible avec au moins un dispositif selon l'une des revendications 1 à 9.
